# EUROPEAN PATENT APPLICATION

(11) **EP 4 585 339 A1**
(43) Date of publication of application: **16.07.2025**
(21) Application number: 23863045.3
(22) Date of filing: 30.08.2023
(51) Int. Cl.: B23C 5/10, B23C 5/16

(54) **END MILL**

(30) Priority: 09.09.2022 JP 2022143470
(71) Applicant: MOLDINO Tool Engineering, Ltd., Tokyo 130-0026 (JP)
(72) Inventor: KATAYAMA, Kazuki, Yasu-shi, Shiga 520-2323 (JP); IHARADA, Yuki, Yasu-shi, Shiga 520-2323 (JP)
(74) Representative: Hoffmann Eitle
(86) International application number: PCT/JP2023/031466
(87) International publication number: WO 2024/053506

(57) **Abstract**

An end mill (1) includes a cutting edge portion (3) and a shank (2), which are rotated around a central axis (O), in which the end mill (1) includes a bottom cutting edge (11) located on a tip surface of the cutting edge portion (10), and a peripheral cutting edge (13) located on an outer peripheral surface of the cutting edge portion (10), the bottom cutting edge (11) has a bottom cutting edge outer peripheral portion (11a) that extends from an outer peripheral end of the bottom cutting edge to the shank side toward an inner side in a radial direction at an inclination angle (α) of 3° or less with respect to a plane orthogonal to the central axis (O), a flank angle of a bottom cutting edge outer peripheral portion primary flank face (14a) adjacent to the bottom cutting edge outer peripheral portion (11a) is larger than a flank angle of a peripheral cutting edge primary flank face (14a) adjacent to the peripheral cutting edge (13), and a width (W2) of the bottom cutting edge outer peripheral portion primary flank face is larger than a width (W1) of the peripheral cutting edge primary flank face.

## Description

### TECHNICAL FIELD

The present invention relates to an end mill.

Priority is claimed on Japanese Patent Application No. 2022-143470, filed September 9, 2022, the content of which is incorporated herein by reference.

### BACKGROUND ART

In the related art, it is known that, in order to improve the edge tip strength of a peripheral cutting edge of an end mill, a flank face having a minute flank angle and a minute flank face width is provided on a flank face of the peripheral cutting edge, as disclosed in Patent Document 1, for example.

### Citation List

### Patent Document

Patent Document 1: Japanese Unexamined Patent Application, First Publication No. 2012-091306(A)

### SUMMARY OF INVENTION

### Technical Problem

However, even in the end mill in which the edge tip strength is increased by providing the minute flank face, there is a case where chipping or fracture near a peripheral cutting edge tip cannot be sufficiently suppressed, and it is desired to further extend the tool life. In particular, in an end mill in which a base material is CBN having poor fracture resistance, there is a problem in that chipping or fracture near the peripheral cutting edge tip easily occurs.

An object of the present invention is to provide an end mill having a long life, in which chipping or fracture near a peripheral cutting edge tip is suppressed.

### Solution to Problem

(1) According to an aspect of the present invention, there is provided an end mill including: a cutting edge portion and a shank, which are rotated around a central axis. The end mill includes a bottom cutting edge located on a tip surface of the cutting edge portion, and a peripheral cutting edge located on an outer peripheral surface of the cutting edge portion. The bottom cutting edge has a bottom cutting edge outer peripheral portion that extends from an outer peripheral end of the bottom cutting edge to the shank side toward an inner side in a radial direction at an inclination angle of 3° or less with respect to a plane orthogonal to the central axis. A flank angle of a bottom cutting edge outer peripheral portion primary flank face adjacent to the bottom cutting edge outer peripheral portion is larger than a flank angle of a peripheral cutting edge primary flank face adjacent to the peripheral cutting edge. A width of the bottom cutting edge outer peripheral portion primary flank face is larger than a width of the peripheral cutting edge primary flank face.
   According to the above configuration, the bottom cutting edge has the bottom cutting edge outer peripheral portion with a concave angle of 3° or less, so that a direction of cutting force of the bottom cutting edge can be made closer to a direction parallel to the central axis, and a load acting from the bottom cutting edge toward the peripheral cutting edge can be reduced. In addition, not only by making the flank angle of the bottom cutting edge outer peripheral portion primary flank face larger than the flank angle of the peripheral cutting edge primary flank face, but also by making the width of the bottom cutting edge outer peripheral portion primary flank face larger than the width of the peripheral cutting edge primary flank face, it is possible to not only increase the edge tip strength of the peripheral cutting edge but also to reduce a load acting from the bottom cutting edge toward the peripheral cutting edge in the vicinity of the peripheral cutting edge tip while ensuring sufficient rigidity of the vicinity of the tip of the end mill without excessively increasing cutting force of the bottom cutting edge, despite suppression of the concave angle of the bottom cutting edge outer peripheral portion to 3° or less, and it is possible to effectively suppress chipping or large fracture that occurred in the vicinity of the peripheral cutting edge tip.
(2) In the end mill according to the above (1), the cutting edge portion may be made of a CBN sintered body.
(3) In the end mill according to the above (1) or (2), the bottom cutting edge outer peripheral portion and the peripheral cutting edge may be connected to each other via a corner R cutting edge, and in a side view of the end mill, a width of a corner R cutting edge primary flank face adjacent to the corner R cutting edge may gradually decrease toward a posterior end side of the corner R cutting edge from a tip side of the corner R cutting edge, and a flank angle of the corner R cutting edge primary flank face may also gradually decrease toward a peripheral cutting edge side from a bottom cutting edge side.
(4) In the end mill according to any one of the above (1) to (3), a ratio of a width of a primary flank face of the first cutting edge to a width of a primary flank face of the second cutting edge may be within a range of 3 or more and 20 or less.
(5) In the end mill according to any one of the above (1) to (4), a difference between a flank angle of a primary flank face of the first cutting edge and a flank angle of a primary flank face of the second cutting edge may be 4° or more.
(6) In the end mill according to the above (5), the flank angle of the primary flank face of the first cutting edge may be 15° or less, and the flank angle of the primary flank face of the second cutting edge may be 5° or less.

### Advantageous Effects of Invention

According to an aspect of the present invention, an end mill having a long life, in which chipping or fracture near a peripheral cutting edge tip is suppressed, is provided.

### BRIEF DESCRIPTION OF DRAWINGS

[FIG. 1] FIG. 1 is a side view showing the entirety of an end mill of an embodiment.
[FIG. 2] FIG. 2 is a perspective view showing a cutting edge portion of the end mill of the embodiment in an enlarged manner.
[FIG. 3] FIG. 3 is a perspective view showing a corner portion of the cutting edge portion in an enlarged manner.
[FIG. 4] FIG. 4 is a schematic diagram of a cutting edge, as viewed from a front side in a tool rotation direction T.
[FIG. 5] FIG. 5 is a tip surface diagram (view of a tip surface) when a tip surface of the end mill is viewed from an extension direction of a rotational axis.
[FIG. 6] FIG. 6 is a side view (view of a side surface) of a peripheral cutting edge primary flank face, as viewed from a direction orthogonal to the extension direction of the rotational axis.
[FIG. 7] FIG. 7 is a schematic diagram showing a machining method for a cutting evaluation of an example.

### DESCRIPTION OF EMBODIMENTS

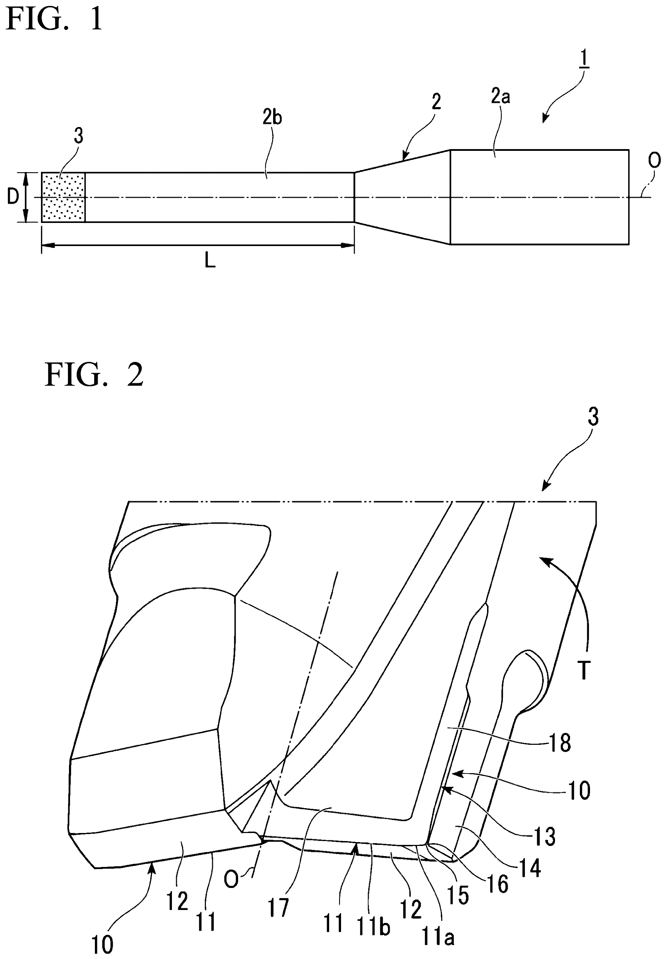

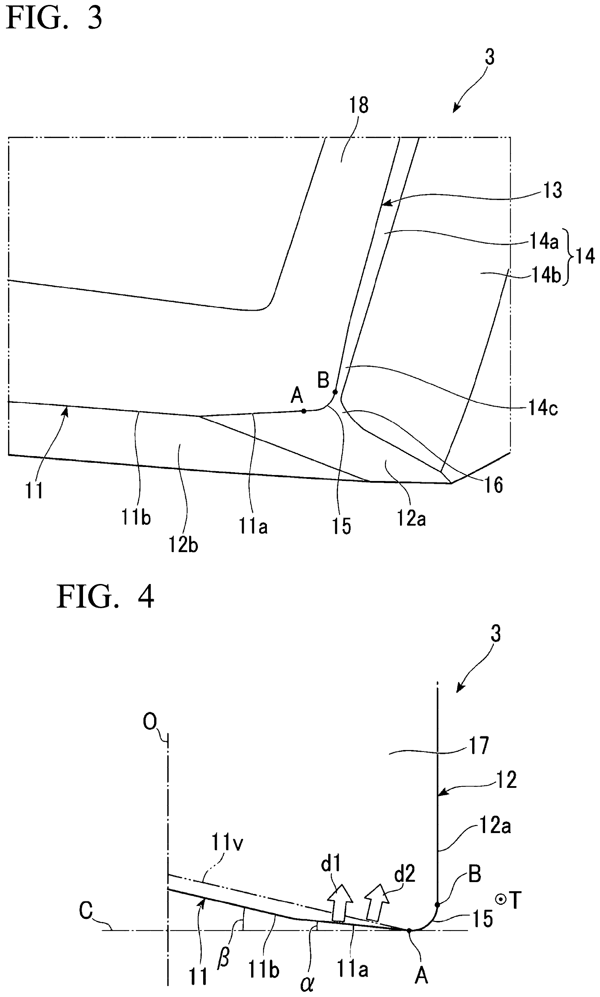

FIG. 1 is a side view showing the entirety of an end mill of the present embodiment. FIG. 2 is a perspective view showing a cutting edge portion 3 of an end mill 1 of the present embodiment in an enlarged manner. FIG. 3 is a perspective view showing a corner portion of the cutting edge portion 3 in an enlarged manner.

The end mill 1 of the present embodiment is a long neck radius end mill having a tool diameter D of 2 mm, a corner R radius of 0.02 mm, and a neck length L of 6 mm. The end mill 1 includes a shank 2 that extends along a central axis O, and the cutting edge portion 3 that is fixed to a tip of the shank 2. The end mill 1 is used by being rotated around the central axis O. Therefore, the central axis O is a rotation center axis of the end mill 1.

In the description of the present embodiment, a direction in which the central axis O of the end mill 1 extends, that is, a direction along the central axis O is referred to as an axial direction. In the axial direction, a direction from the cutting edge portion 3 toward the shank 2 is referred to as a posterior end side. The posterior end side is a right side in FIG. 1. In the axial direction, a direction from the shank 2 toward the cutting edge portion 3 is referred to as a tip side. The tip side is a left side in FIG. 1. A direction orthogonal to the central axis O is referred to as a radial direction. In the radial directions, a direction approaching the central axis O is referred to as an inner side in the radial direction, and a direction away from the central axis O is referred to as an outer side in the radial direction or an outer periphery side. A direction rotating around the central axis O is referred to as a circumferential direction. In the circumferential directions, a direction in which the end mill 1 is rotated during a cutting operation is referred to as a tool rotation direction T (refer to FIG. 2), and a rotational direction opposite to the tool rotation direction T is referred to as an opposite direction or a counter tool rotation direction.

The shank 2 includes a shank main body portion 2a that is mounted on a main spindle of a machine tool, and a neck portion 2b that extends from the shank main body portion 2a toward the tip side along the central axis O. The shank main body portion 2a has a columnar shape that extends along the central axis O on the posterior end side, and has a tapered shape that is tapered toward the neck portion 2b on the tip side. The neck portion 2b extends from a tip of the tapered portion of the shank main body portion 2a to the tip side. The neck portion 2b has a columnar shape having a smaller diameter than the shank main body portion 2a. The cutting edge portion 3 is fixed to the tip of the neck portion 2b of the shank 2.

The cutting edge portion 3 is a CBN sintered body in the present embodiment. The cutting edge portion 3 may have a configuration in which the entirety of the cutting edge portion 3 is made of a cemented carbide. In a case where the cutting edge portion 3 is made of a cemented carbide, a configuration may be adopted in which the shank 2 and the cutting edge portion 3 are provided in a single cemented carbide member.

The cutting edge portion 3 has two cutting edges 10. The cutting edge portion 3 has a 180° rotational symmetrical shape with the central axis O as a symmetry axis. The two cutting edges 10 are disposed with 180° rotational symmetry about the central axis O. Each of the two cutting edges 10 is provided with a bottom cutting edge 11, a bottom cutting edge flank face 12, a peripheral cutting edge 13, a peripheral cutting edge flank face 14, a corner R cutting edge 15, a corner R cutting edge primary flank face 16, a rake face 17, and a negative land 18.

The bottom cutting edge 11 is located at a tip end portion (a tip surface) in the axial direction of the end mill 1. FIG. 4 is a schematic diagram of the cutting edge 10 as viewed from a front side in a tool rotation direction T. As shown in FIG. 4, when a reference plane including the central axis O and an outer peripheral end A of the bottom cutting edge 11 is viewed from the front, the bottom cutting edge 11 has a bottom cutting edge outer peripheral portion 11a that extends from the outer peripheral end A of the bottom cutting edge 11 toward a posterior end side in the axial direction toward an inner side in the radial direction at an inclination angle (a concave angle) of 3° or less with respect to a plane C orthogonal to the central axis O. In the present invention, a concave angle α of at least the bottom cutting edge outer peripheral portion 11a including the outer peripheral end A in the bottom cutting edge 11 may be 3° or less. That is, the concave angle of the entire bottom cutting edge 11 may be 3° or less, the concave angle of the bottom cutting edge outer peripheral portion 11a may be 3° or less, and the concave angle of a bottom cutting edge inner peripheral portion, which is a portion on the central axis side with respect to the bottom cutting edge outer peripheral portion 11a, may be larger than 3°. The concave angle α is an angle exceeding 0° and 3° or less. In the case of the present embodiment, the concave angle α of the bottom cutting edge outer peripheral portion 11a is 1°, and a concave angle β of a bottom cutting edge inner peripheral portion 11b that extends from an end portion on the inner side in the radial direction of the bottom cutting edge outer peripheral portion 11a toward further the inner side in the radial direction is 6°.

In the present invention, the corner R cutting edge 15 may be provided or may not be provided between the bottom cutting edge 11 and the peripheral cutting edge 13. In the end mill 1 of the present embodiment, the corner R cutting edge 15 is provided, and the outer peripheral end A of the bottom cutting edge 11 is connected to one end of the corner R cutting edge 15. That is, the outer peripheral end A of the bottom cutting edge outer peripheral portion 11a is connected to one end of the corner R cutting edge 15. In the case of the present embodiment, a radial length of the bottom cutting edge outer peripheral portion 11a is 0.25 mm (0.125D), and a radial length of the bottom cutting edge inner peripheral portion 11b is 0.75 mm (0.375D).

The inclination angle β of the bottom cutting edge inner peripheral portion 11b is not limited as long as it is an angle larger than the inclination angle α of the bottom cutting edge outer peripheral portion 11a. However, it is preferable that the difference between the inclination angle β and the inclination angle α is 3° or more. That is, it is preferable that the inclination angle β is an angle exceeding 3°. The difference between the inclination angle β and the inclination angle α is more preferably 4° or more or 5° or more. In the present embodiment, the inclination angle β of the bottom cutting edge inner peripheral portion 11b is 6°.

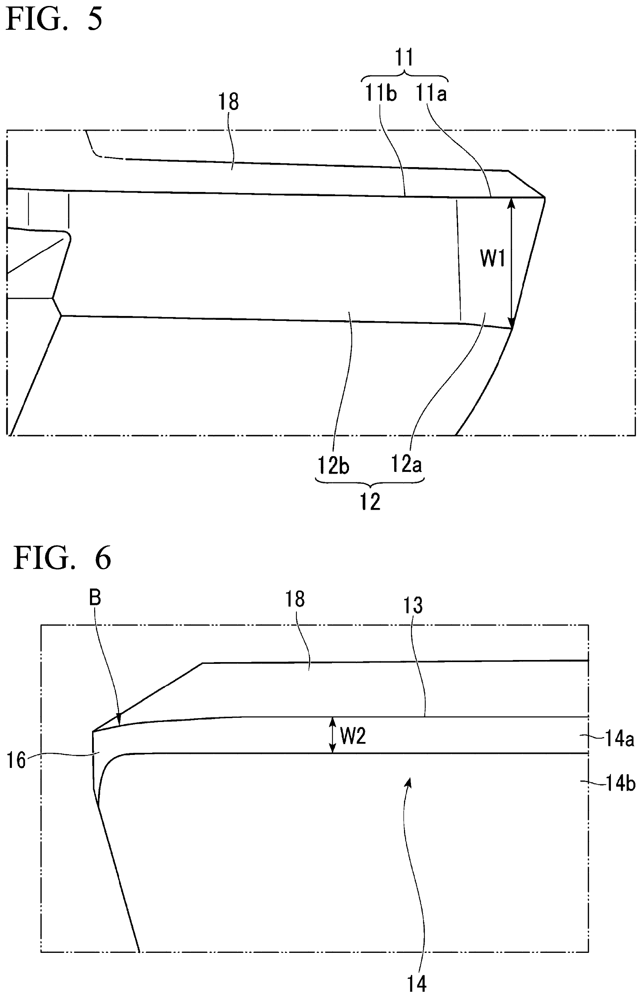

As shown in FIGS. 3 and 5, in the flank face of the cutting edge 10, a portion which extends along the bottom cutting edge 11 and in a direction opposite to the tool rotation direction T of the bottom cutting edge 11 is the bottom cutting edge flank face 12. The bottom cutting edge flank face 12 is located on the tip surface of the cutting edge portion 3. The bottom cutting edge flank face 12 includes a bottom cutting edge outer peripheral portion primary flank face 12a adjacent to the bottom cutting edge outer peripheral portion 11a and a bottom cutting edge inner peripheral portion primary flank face 12b adjacent to the bottom cutting edge inner peripheral portion 11b. In the present specification, a flank face adjacent to the cutting edge at the rear of the cutting edge in the rotational direction is named as a "primary flank face", and a flank face adjacent to the primary flank face at the rear in the rotational direction is named as a "secondary flank face".

The bottom cutting edge flank face 12 extends from the bottom cutting edge 11 toward a posterior end side in a direction opposite to the tool rotation direction T. In this way, the bottom cutting edge flank face 12 is provided with a flank angle. In the case of the present embodiment, both a flank angle γ of the bottom cutting edge outer peripheral portion primary flank face 12a and a flank angle of the bottom cutting edge inner peripheral portion primary flank face 12b are 10°.

FIG. 5 is a tip surface diagram (view of a tip surface) when the tip surface of the end mill is viewed from an extension direction of a rotational axis. As shown in FIG. 5, in the present specification, a width W1 of the bottom cutting edge outer peripheral portion primary flank face 12a means the maximum length of the bottom cutting edge outer peripheral portion primary flank face 12a in a direction orthogonal to the extension direction of the bottom cutting edge 11 in the view of the tip surface. In the present embodiment, the width W1 of the bottom cutting edge outer peripheral portion primary flank face 12a is 0.12D.

The peripheral cutting edge 13 is located at an outer end portion in the radial direction of the cutting edge 10. The peripheral cutting edge 13 extends along the axial direction and is connected to an end portion (connection point B) on a posterior end side of the corner R cutting edge 15. In the present embodiment, an axial length of the peripheral cutting edge 13 is 0.5 mm. A rotation trajectory of the peripheral cutting edge 13 when the end mill 1 is rotated about the central axis O is a cylindrical shape centered on the central axis O.

In the flank faces of the cutting edge 10, a portion that extends along the peripheral cutting edge 13 and to the rear side in the rotational direction of the peripheral cutting edge 13 is the peripheral cutting edge flank face 14. The peripheral cutting edge flank face 14 is disposed on the outer peripheral surface of the cutting edge portion 3. The peripheral cutting edge flank face 14 extends from the peripheral cutting edge 13 toward the inner side in the radial direction toward the direction opposite to the tool rotation direction T. In this way, the peripheral cutting edge flank face 14 is provided with a flank angle.

In the present embodiment, the peripheral cutting edge flank face 14 includes a peripheral cutting edge primary flank face 14a having a minute width and located adjacent to the peripheral cutting edge 13 and a peripheral cutting edge secondary flank face 14b having a wide width and located adjacent to the rear side of the peripheral cutting edge primary flank face 14a in the tool rotation direction T. In the present embodiment, a flank angle ε of the peripheral cutting edge primary flank face 14a is 4°. A flank angle of the peripheral cutting edge secondary flank face 14b is larger than the flank angle ε of the peripheral cutting edge primary flank face 14a. In the present embodiment, the flank angle of the peripheral cutting edge secondary flank face 14b is 14°.

FIG. 6 is a side view (view of a side surface) of the peripheral cutting edge primary flank face 14a of the end mill, as viewed from the direction orthogonal to the extension direction of the central axis. As shown in FIG. 6, in the present specification, a width W2 of the peripheral cutting edge primary flank face 14a means the maximum length of the peripheral cutting edge primary flank face 14a in the direction orthogonal to the extension direction of the peripheral cutting edge 13 in a side view.

In the present embodiment, as shown in FIG. 3, a tip-side portion 14c of the peripheral cutting edge primary flank face 14a has a shape in which a width gradually narrows toward the tip side. However, the peripheral cutting edge primary flank face 14a adjacent to the peripheral cutting edge 13 has a predetermined width over the entire area of the peripheral cutting edge 13. That is, the peripheral cutting edge primary flank face 14a is formed as a flank face having a predetermined width even at the connection point B between the peripheral cutting edge 13 and the corner R cutting edge 15. In the present embodiment, the width W2 of the peripheral cutting edge primary flank face 14a is 0.01D, and the width of the peripheral cutting edge secondary flank face 14b adjacent to the peripheral cutting edge primary flank face 14a on the rear side in the rotational direction is 0.15D.

In the present invention, in a case where the flank angle γ of the bottom cutting edge outer peripheral portion primary flank face 12a is larger than the flank angle ε of the peripheral cutting edge primary flank face 14a and the width W1 of the bottom cutting edge outer peripheral portion primary flank face 12a is larger than the width W2 of the peripheral cutting edge primary flank face 14a, the flank angle γ of the bottom cutting edge outer peripheral portion primary flank face 12a and the width W1 of the flank face may be constant or may vary along the bottom cutting edge, and the flank angle ε of the peripheral cutting edge primary flank face 14a and the width W2 of the peripheral cutting edge primary flank face 14a may be constant or may vary along the peripheral cutting edge 13.

The corner R cutting edge 15 is formed in an arc shape that connects the outer peripheral end A in the radial direction of the bottom cutting edge outer peripheral portion 11a and the tip (the connection point B) of the peripheral cutting edge 13 and that is convex toward the outer periphery side of the tip of the cut cutting edge portion 3. In a case where the end mill 1 is rotated around the central axis O, the rotation trajectories of the pair of corner R cutting edges 15 form substantially 1/4 circular arc shapes. In the present embodiment, the radius of the corner R cutting edge is 0.02 mm.

The corner R cutting edge primary flank face 16 is disposed adjacent to the corner R cutting edge 15 on the opposite side in the tool rotation direction T of the corner R cutting edge 15. The corner R cutting edge primary flank face 16 has a curved surface shape that is convex toward the outer periphery side of the tip of the cutting edge portion 3, and is formed to face the outer side in the radial direction and the tip side. The corner R cutting edge primary flank face 16 is inclined to face the inner side in the radial direction and the posterior end side toward the side opposite to the tool rotation direction T from the corner R cutting edge 15, and is provided with a flank angle. As shown in FIG. 6, in a side view in the radial direction, the width of the corner R cutting edge primary flank face 16 gradually changes (decreases) toward the posterior end side from the tip side. In addition, the flank angle of the corner R cutting edge primary flank face 16 also gradually changed (decreased) toward the peripheral cutting edge 13 side from the bottom cutting edge 11 side. In this way, in the present invention in which the primary flank faces of the bottom cutting edge outer peripheral portion 11a and the peripheral cutting edge 13 have different flank angles and widths, a sudden change in cutting force between both the cutting edges can be alleviated, and chipping or fracture in the tip end portion of the bottom cutting edge 11 can be further suppressed.

The negative land 18 is formed along a peripheral edge portion of the rake face 17. The negative land 18 is formed in an L shape when viewed from the front side in the tool rotation direction T. The negative land 18 is disposed along the entire area of the L-shaped cutting edge 10. The negative land 18 is an inclined face located on the rear side in the tool rotation direction T toward the peripheral edge of the rake face 17. Each of the bottom cutting edge 11, the peripheral cutting edge 13, and the corner R cutting edge 15 is provided with a negative rake angle due to the negative land 18. In the case of the present embodiment, the rake angles of the bottom cutting edge 11, the peripheral cutting edge 13, and the corner R cutting edge 15 are -30°.

In the end mill 1 of the present embodiment described above, the concave angle α of bottom cutting edge outer peripheral portion 11a extending toward the inner side in the radial direction from the outer peripheral end A of the bottom cutting edge 11 is 3° or less, and each of the flank angle γ and the width W1 of the bottom cutting edge outer peripheral portion primary flank face 12a adjacent to the bottom cutting edge outer peripheral portion 11a is larger than each of the flank angle ε and the width W2 of the peripheral cutting edge primary flank face 14a adjacent to the peripheral cutting edge 13. This action and effect will be described below.

In a virtual bottom cutting edge 11v shown by a two-dot chain line in FIG. 4 as a comparative example, a concave angle α of a bottom cutting edge outer peripheral portion including the outer peripheral end A of the bottom cutting edge 11 is 6°. In the cutting operation using the bottom cutting edge 11 of the present embodiment in which the concave angle of the bottom cutting edge outer peripheral portion 11a is 1° and the cutting operation using the virtual bottom cutting edge 11v in which the concave angle of the bottom cutting edge outer peripheral portion is 6°, the directions of the cutting force of the bottom cutting edges are different from each other. That is, a direction d1 of the cutting force of the bottom cutting edge outer peripheral portion 11a having a small concave angle (inclination angle α) is closer to a direction parallel to the axial direction than a direction d2 of the cutting force of the virtual bottom cutting edge 11v having a large concave angle. In this way, in the end mill 1, a load acting from the bottom cutting edge 11 toward the peripheral cutting edge 13 in the vicinity of the peripheral cutting edge tip is reduced.

Further, in the present invention, not only by making the flank angle γ of the bottom cutting edge outer peripheral portion primary flank face 12a larger than the flank angle ε of the peripheral cutting edge primary flank face 14a, but also by making the width W1 of the bottom cutting edge outer peripheral portion primary flank face 12a larger than the width W2 of the peripheral cutting edge primary flank face 14a, it is possible to not only increase the edge tip strength of the peripheral cutting edge but also to reduce a load acting from the bottom cutting edge 11 toward the peripheral cutting edge 13 in the vicinity of the peripheral cutting edge tip while ensuring sufficient rigidity of the vicinity of the tip of the end mill without excessively increasing cutting force of the bottom cutting edge, despite suppression of the concave angle of the bottom cutting edge outer peripheral portion to 3° or less, and it is possible to effectively suppress chipping or large fracture that occurred in the vicinity of the peripheral cutting edge tip.

In particular, in a case where a CBN sintered body having poor fracture resistance is used as a base material of the cutting edge portion 3 or a case where the corner R radius is 0.1 mm or less, the problem is particularly remarkable, and even in a case where the cutting edge is made to have a large cutting edge angle by reducing the flank angle of the peripheral cutting edge or the bottom cutting edge, a large fracture having a size reaching about 20% of the tool diameter direction in the axial direction sometimes occurred in the vicinity of the peripheral cutting edge tip. However, with the configuration of the present invention as described above, even in a case where a CBN sintered body having poor fracture resistance is used as a base material of the cutting edge portion 3, or even in a case where the corner R radius is 0.1 mm or less, fracture or chipping near the peripheral cutting edge tip can be sufficiently suppressed.

In the embodiment described above, the dimensions of each portion have been specifically described as an example. However, the dimensions of each portion in the end mill 1 can be changed within a range in which the functions are not impaired.

Although the length of the bottom cutting edge outer peripheral portion 11a is set to 0.25 mm (0.125D) in the embodiment described above, the length of the bottom cutting edge outer peripheral portion 11a is preferably 0.05D or more in a case where the tool diameter D is 1 mm or more. 0.1D or more is more preferable. The length of the bottom cutting edge outer peripheral portion 11a is preferably 0.8D or less, and more preferably 0.5D or less. In a case where the bottom cutting edge outer peripheral portion 11a is too long, the cutting force of the bottom cutting edge 11 increases. In a case where the bottom cutting edge outer peripheral portion 11a is too short, the effect of bringing the direction of the cutting force closer to the axial direction is reduced, and the effect of suppressing the fracture near the tip of the peripheral cutting edge 13 is reduced.

In the end mill 1 in which the tool diameter D is less than 1 mm, it is difficult to process the two cutting edges having different concave angles on the bottom cutting edge 11. Therefore, in the end mill 1 having the tool diameter D of less than 1 mm, the concave angle of the entire bottom cutting edge 11 may be set to 3° or less. That is, a configuration may be adopted in which the entire bottom cutting edge 11 has the same concave angle of 3° or less as the bottom cutting edge outer peripheral portion 11a.

The flank angle γ of the bottom cutting edge outer peripheral portion primary flank face 12a of the bottom cutting edge outer peripheral portion 11a and the flank angle ε of the peripheral cutting edge primary flank face 14a are preferably angles having a difference of 4° or more therebetween, and the difference is more preferably 5° or more. In the embodiment described above, the angle difference γ - ε between the flank angles is 6°. The flank angle γ of the bottom cutting edge outer peripheral portion primary flank face 12a is preferably in a range of 15° or less, and the flank angle ε of the peripheral cutting edge primary flank face 14a is preferably in a range of 5° or less.

The ratio (W1/W2) of the width (W1) of the bottom cutting edge outer peripheral portion primary flank face 12a of the bottom cutting edge outer peripheral portion 11a to the width (W2) of the peripheral cutting edge primary flank face 14a is preferably in a range of 3 or more and 20 or less. The lower limit value of the ratio (W1/W2) is preferably 5 or more, and more preferably 8 or more. The upper limit value of the ratio (W1/W2) is preferably 18 or less, and more preferably 15 or less.

The width (W1) of the bottom cutting edge outer peripheral portion primary flank face 12a of the bottom cutting edge outer peripheral portion 11a is preferably in a range of 0.11D or more and 0.19D or less with respect to the tool diameter D. The width (W1) is more preferably 0.12D or more, or 0.13D or more. The width (W1) is more preferably 0.18D or less, or 0.17D or less. In the above embodiment in which the tool diameter D is 2 mm, the width (W1) is preferably in a range of 0.22 mm or more and 0.38 mm or less.

The width (W2) of the peripheral cutting edge primary flank face 14a is preferably in a range of 0.01D or more and 0.04D or less with respect to the tool diameter D. The width (W2) is more preferably 0.15D or more, or 0.02D or more. The width (W2) is more preferably 0.035D or less, or 0.03D or less. In the above embodiment in which the tool diameter D is 2 mm, the width (W2) is preferably in a range of 0.02 mm or more and 0.08 mm or less.

The flank angle of the bottom cutting edge inner peripheral portion primary flank face 12b is preferably in a range of 15° or less. In the embodiment described above, both the flank angle γ of the bottom cutting edge outer peripheral portion primary flank face 12a and the flank angle of the bottom cutting edge inner peripheral portion primary flank face 12b are set to 10°. However, the flank angle γ of the bottom cutting edge outer peripheral portion primary flank face 12a and the flank angle of the bottom cutting edge inner peripheral portion primary flank face 12b may be different angles from each other.

The radius (corner R radius) of the corner R cutting edge 15 is not particularly limited. In a case where the tool diameter D of the end mill is 3 mm or less, when the corner R radius is 0.1 mm or less, fracture easily occurs near the peripheral cutting edge tip. Therefore, the configuration of the present embodiment is suitable for a radius end mill in which the tool diameter D is 3 mm and the corner R radius is 0.1 mm or less, or a square end mill.

The rake angle of each of the bottom cutting edge 11, the peripheral cutting edge 13, and the corner R cutting edge 15 is preferably in a range of -50° or more and -20° or less. The above rake angle is more preferably -45° or more or -35° or more. The above rake angle is more preferably -25° or less. The rake angle of the bottom cutting edge 11, the rake angle of the peripheral cutting edge 13, and the rake angle of the corner R cutting edge 15 may be different angles from each other.

### Examples

Hereinafter, the present invention will be more specifically described with reference to an example. However, the present invention is not limited to this example.

### [Production of End Mill and Cutting Test]

As Example 1, the end mill having the embodiment described above was produced. The specifications are shown below.
Cutting edge portion: CBN, two-flute
Shank: cemented carbide
Tool diameter (cutting edge diameter) D: 2 mm
Corner R radius: 0.02 mm
Neck length: 6 mm
Bottom cutting edge outer peripheral portion: concave angle of 1°
Bottom cutting edge outer peripheral portion primary flank face: flank angle of 10°, width of 0.24 mm
Bottom cutting edge inner peripheral portion: concave angle of 6°
Bottom cutting edge inner peripheral portion primary flank face: flank angle of 10°
Peripheral cutting edge: twist angle of 0°
Peripheral cutting edge primary flank face: flank angle of 4°, width of 0.02 mm
Peripheral cutting edge secondary flank face: flank angle of 14°, width of 0.30 mm
Negative land: rake angle of -30°

In addition, end mills of Comparative Examples 1 to 4 as shown in Table 1 were produced.

In the end mill of Comparative Example 1, as an example of a general CBN radius end mill of the related art, the flank angle of the peripheral cutting edge primary flank face was set to 14°, the flank angle of the bottom cutting edge outer peripheral portion primary flank face was set to 10°, the width of the peripheral cutting edge primary flank face was set to 0.16D, the width of the bottom cutting edge outer peripheral portion primary flank face was set to 0.12D, and the concave angle of the bottom cutting edge outer peripheral portion was set to 6°. Other configurations are the same as those in Example 1.

Comparative Example 2 is an end mill in which the cutting edge angle of the peripheral cutting edge is larger than that in Comparative Example 1.

Comparative Example 3 is an end mill in which the cutting edge angles of both the peripheral cutting edge and the bottom cutting edge outer peripheral portion are larger than those in Comparative Example 1.

Comparative Example 4 is an end mill in which the cutting edge angles of both the peripheral cutting edge and the bottom cutting edge outer peripheral portion are made larger than those in Comparative Example 1 and the inclination of the bottom cutting edge outer peripheral portion with respect to an axis perpendicular plane is made gentler than that in Comparative Example 1.

In Example 1 described above, only the cutting edge angle of the peripheral cutting edge was made larger than that in Comparative Example 1, the inclination of the bottom cutting edge outer peripheral portion with respect to the axis perpendicular plane was made gentler than that in Comparative Example 1, and each of the flank angle and the flank face width of the bottom cutting edge was made larger than that of the peripheral cutting edge.

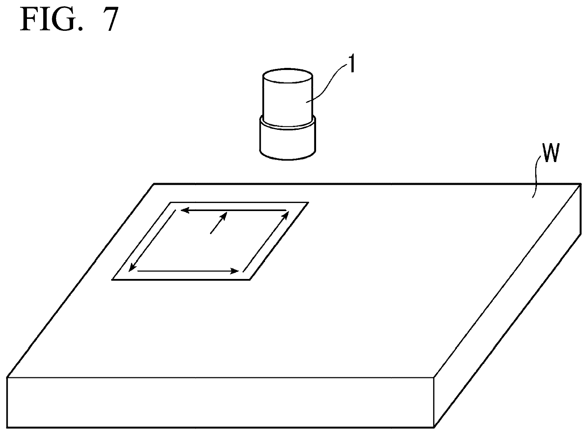

The radius end mills of Example 1 and Comparative Examples 1 to 4 produced as described above were mounted on a machine tool, and a cutting evaluation was performed. FIG. 7 shows a schematic of a machining method during the cutting evaluation. As the material of a workpiece W, an STAVAX material having a dimension of 60 × 60 × 30 (mm) was used. The workpiece W was repeatedly subjected to contour pocket machining of 10 mm x 10 mm x 0.6 mm under conditions of a 1° gradient, no corner R, and an approach inclination angle of 0.5°.

Each time the machining for a predetermined time was performed, the state of the cutting edge of the end mill was observed with a microscope, and the presence or absence of chipping or fracture and the abrasion state were checked.

### <Cutting Conditions>

Workpiece: STAVAX (52HRC)
Coolant: mist blowing
Rotation speed (n) of main spindle: 24,000 rpm (Vc = 150 m/min)
Table feed (Vf): 1200 mm/min (fz = 0.025 mm/t)
Axial cut depth (ap): 0.005 mm (constant)
Radial cut width (ae): 0.2 mm (constant)

**[Table 1]**

| | Example 1 | Comparative Example 1 | Comparative Example 2 | Comparative Example 3 | Comparative Example 4 |
|---|---|---|---|---|---|
| Flank angle γ of bottom cutting edge outer peripheral portion primary flank face | 10° | 10° | 10° | 4° | 4° |
| Flank angle ε of peripheral cutting edge primary flank face | 4° | 14° | 4° | 4° | 4° |
| γ - ε | 6° | -4° | 6° | 0° | 0° |
| Width W1 of bottom cutting edge outer peripheral portion primary flank face | 0.12D | 0.12D | 0.12D | 0.03D | 0.03D |
| Width W2 of peripheral cutting edge primary flank face | 0.01D | 0.16D | 0.01D | 0.01D | 0.01D |
| W1/W2 | 12 | 0.75 | 12 | 3 | 3 |
| Inclination angle α of bottom cutting edge of bottom cutting edge outer peripheral portion with respect to axis perpendicular plane | 1° | 6° | 6° | 6° | 1° |
| γ > ε | Satisfied | Not satisfied | Satisfied | Not satisfied | Not satisfied |
| W1 > W2 | Satisfied | Not satisfied | Satisfied | Satisfied | Satisfied |
| Inclination angle α of bottom cutting edge of bottom cutting edge outer peripheral portion with respect to axis perpendicular plane is 3° or less | Satisfied | Not satisfied | Not satisfied | Not satisfied | Satisfied |
| Cutting result | There is neither fracture nor chipping in peripheral cutting edge after 4-hour cutting. Cutting could be performed for 10 hours. | Large fracture occurred in peripheral cutting edge after 4-hour cutting. | Chipping occurred in peripheral cutting edge after 4-hour cutting. | Chipping occurred in peripheral cutting edge after 4-hour cutting. | Chipping occurred in peripheral cutting edge after 4-hour cutting. |

As shown in Table 1, in the end mill of Comparative Example 1, large fracture occurred in the peripheral cutting edge after cutting for 4 hours.

In Comparative Example 2, the cutting edge angle of the peripheral cutting edge was increased by making the flank angle of the peripheral cutting edge primary flank face smaller than that in Comparative Example 1. However, although no large fracture occurred in the peripheral cutting edge, chipping occurred in the peripheral cutting edge after cutting for 4 hours.

In Comparative Example 3, the cutting edge angles of both the peripheral cutting edge and the bottom cutting edge outer peripheral portion were made larger by making not only the flank angle of the peripheral cutting edge primary flank face but also the flank angle of the bottom cutting edge outer peripheral portion flank face smaller than those in Comparative Example 1. However, also in Comparative Example 3, chipping occurred in the peripheral cutting edge after cutting for 4 hours, as in Comparative Example 2. From this, it was found that, only by an increase of the cutting edge angle of the cutting edge such as the bottom cutting edge or the peripheral cutting edge (improvement of the edge tip strength), the chipping near the peripheral cutting edge tip cannot be sufficiently suppressed.

In Example 1, while making the flank angle of the peripheral cutting edge primary flank face smaller than that in Comparative Example 1, in other words, making the flank angle of the peripheral cutting edge primary flank face smaller than the flank angle of the bottom cutting edge outer peripheral portion primary flank face, the width of the bottom cutting edge outer peripheral portion primary flank face was also made larger than the width of the peripheral cutting edge primary flank face while making the inclination angle of the bottom cutting edge with respect to the axis perpendicular plane smaller than in Comparative Example 1 by focusing on the direction and magnitude of the cutting force of the bottom cutting edge. In such Example 1, the cutting could be performed for 10 hours, and the life was 2.5 times that of Comparative Example 1. In addition, while Comparative Example 4 is based on Example 1, the only difference from Example 1 is that, in order to increase not only the cutting edge angle of the peripheral cutting edge but also the cutting edge angle of the bottom cutting edge, the flank angle γ of the bottom cutting edge outer peripheral portion primary flank face is made smaller than that in Example 1 and is made equal to the flank angle ε of the peripheral cutting edge primary flank face in Example 1. However, in Comparative Example 4, after cutting for 4 hours, chipping occurred in the peripheral cutting edge, reaching the end of the like. From this, it was found that it is important to shift the direction of the cutting force of the bottom cutting edge more toward the central axis side to reduce a load on the peripheral cutting edge near the peripheral cutting edge tip and to prevent the magnitude of the cutting force of the bottom cutting edge from being made excessive.

### INDUSTRIAL APPLICABILITY

It is possible to provide an end mill having a long life, in which chipping or fracture near the peripheral cutting edge tip is suppressed.

### REFERENCE SIGNS LIST

1: End mill
2: Shank
3: Cutting edge portion
10: Cutting edge
11: Bottom cutting edge
11a: Bottom cutting edge outer peripheral portion
12a: Bottom cutting edge outer peripheral portion primary flank face
13: Peripheral cutting edge
14a: Peripheral cutting edge primary flank face
15: Corner R cutting edge
16: Corner R cutting edge primary flank face
A: Outer peripheral end of bottom cutting edge
B: Tip (connection point) of peripheral cutting edge
C: Plane orthogonal to central axis O
D: Tool diameter
W1: Width of bottom cutting edge outer peripheral portion primary flank face
W2: Width of peripheral cutting edge primary flank face
α, β: Inclination angle (concave angle)
O: Central axis

## Claims

1. An end mill comprising:
a cutting edge portion and a shank, which are rotated about a central axis,
wherein the end mill includes a bottom cutting edge located on a tip surface of the cutting edge portion, and a peripheral cutting edge located on an outer peripheral surface of the cutting edge portion,
the bottom cutting edge has a bottom cutting edge outer peripheral portion that extends from an outer peripheral end of the bottom cutting edge to the shank side toward an inner side in a radial direction at an inclination angle of 3° or less with respect to a plane orthogonal to the central axis,
a flank angle of a bottom cutting edge outer peripheral portion primary flank face adjacent to the bottom cutting edge outer peripheral portion is larger than a flank angle of a peripheral cutting edge primary flank face adjacent to the peripheral cutting edge, and
a width of the bottom cutting edge outer peripheral portion primary flank face is larger than a width of the peripheral cutting edge primary flank face.

2. The end mill according to Claim 1,
wherein the cutting edge portion is made of a CBN sintered body.

3. The end mill according to Claim 1 or 2,
wherein the bottom cutting edge outer peripheral portion and the peripheral cutting edge are connected to each other via a corner R cutting edge,
in a side view of the end mill, a width of a corner R cutting edge primary flank face adjacent to the corner R cutting edge gradually decreases toward a posterior end side of the corner R cutting edge from a tip side of the corner R cutting edge, and
a flank angle of the corner R cutting edge primary flank face also gradually decreases toward a peripheral cutting edge side from a bottom cutting edge side.

4. The end mill according to Claim 1 or 2,
wherein a ratio of the width of the bottom cutting edge outer peripheral portion primary flank face to the width of the peripheral cutting edge primary flank face is within a range of 3 or more and 20 or less.

5. The end mill according to Claim 1 or 2,
wherein a difference between the flank angle of the bottom cutting edge outer peripheral portion primary flank face and the flank angle of the peripheral cutting edge primary flank face is 4° or more.

6. The end mill according to Claim 5,
wherein the flank angle of the bottom cutting edge outer peripheral portion primary flank face is 15° or less, and
the flank angle of the peripheral cutting edge primary flank face is 5° or less.
